# EUROPEAN PATENT APPLICATION

(11) **EP 2 965 795 A1**
(43) Date of publication of application: **13.01.2016**
(21) Application number: 15176544.3
(22) Date of filing: 13.07.2015
(51) Int. Cl.: B01D 3/08

(54) **ROTARY EVAPORATOR CONFIGURED FOR REMOTE MONITORING**

(30) Priority: 11.07.2014 US 201462023669 P
(71) Applicant: Wu, Jeff, Stafford, Texas 77477 (US); Wu, Frank, Stafford, TX 77477 (US)
(72) Inventor: Wu, Jeff, Stafford, Texas 77477 (US); Wu, Frank, Stafford, TX 77477 (US)
(74) Representative: MERH-IP Matias Erny Reichl Hoffmann Patentanwälte PartG mbB

(57) **Abstract**

A rotary evaporator configured to communicate to connected devices. In at least one embodiment, the communication between the rotary evaporator and the connected devices can be wireless. Additionally, the rotary evaporator can be configured such that one or more of the components of the rotary evaporator are modular. One or more of the components of the rotary evaporator can be replaceable.

## Description

### CROSS-REFERENCE TO RELATED APPLICATION

This application claims benefit of U.S. provisional application Serial No. 62/023,669 filed July 11, 2014, and entitled "ROTARY EVAPORATOR CONFIGURED FOR REMOTE MONITORING" which is hereby incorporated herein by reference in its entirety.

### FIELD OF TECHNOLOGY

The present disclosure relates distillation apparatus that can be used in at least one of a laboratory, a small batch production facility, a commercial kitchen or a private kitchen.

### BACKGROUND

Rotary evaporators are used for distilling or separating a wide variety of compounds. Typically rotary evaporators have been used in a lab or commercial production to separate different compounds in a mixture. For instance the making of "moonshine" is an example of distillation where alcohol is distilled from a water alcohol mixture. Rotary evaporators comprise a distillation flask where a mixture to be distilled is located, a vapor tube connecting the distillation flask with a condenser that is usually cooled to condense the distillate, and a distillate collection flask that collects the distillate from the condenser. The vapor tube and the distillation flask can be rotated via a motor to provide a larger and more uniform area for distillation while the distillation flask is lowered into a bath to allow the distillates to "boil/evaporate" off.

### SUMMARY

In one aspect of the invention, there is provided a rotary evaporator device comprising: a glassware portion including a first distillation flask, a vapor tube, a condensing chamber, a condenser coil, and a second distillate flask, wherein the first distillation flask is coupled to the vapor tube, the condenser coil is contained within the condensing chamber, both of the first distillate flask and the second distillate flask are coupled to the condensing chamber; a mechanical portion comprising a motorized lift, a motor that is configured to turn the vapor tube and a water bath, and a vacuum pump; and an electronic portion, wherein the electronic potion comprises a display and a microprocessor and a wireless radio for external monitoring. In some embodiments, the display may be an LCD display. In some embodiments, the electronic portion is housed with the mechanical portion.

In another aspect of the invention, there is provided a rotary evaporator device comprising: a glassware portion including a first distillation flask coupled to a vapor tube that is placed within a condenser, and a second distillate flask coupled to the condenser and configured to receive a condensate; a mechanical portion comprising a motorized lift coupled to the distillation flask, a motor configured to turn the vapor tube, a modular water bath configured to receive the distillation flask, and a modular vacuum pump to apply a vacuum to the glassware portion; and an electric portion comprising a display coupled to a microprocessor that is coupled to the lift mechanism, the modular water bath, the modular vacuum pump and a wireless transmitter for external monitoring.

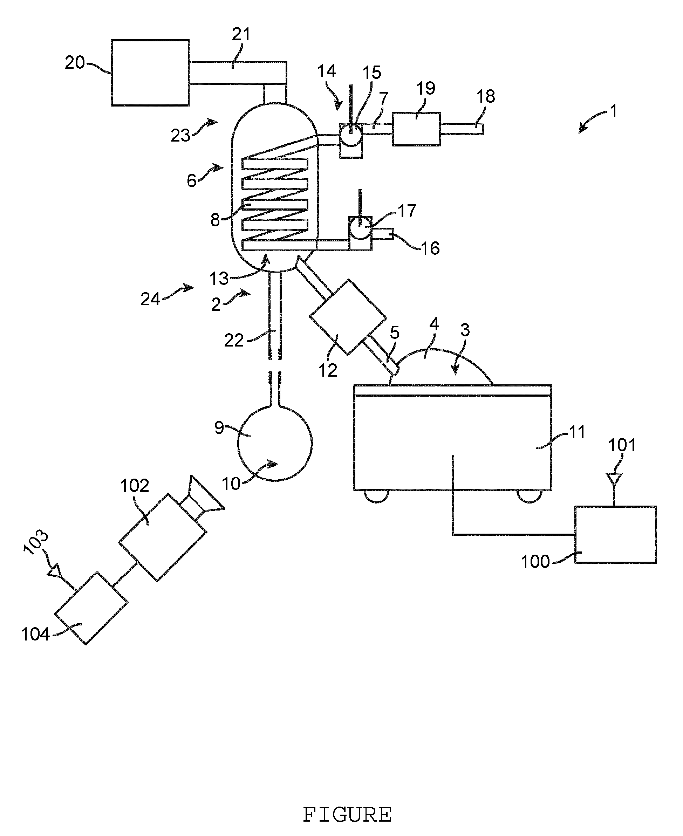

### BRIEF DESCRIPTION OF THE DRAWING

Implementations of the present technology will now be described, by way of example only, with reference to the attached figure.

The figure is a perspective view of a wireless rotary evaporator.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without departing from the scope of the disclosure.

Several definitions that apply throughout this document will now be presented. "Connected device" means a microprocessor controlled device, a cell phone, a laptop computer, a tablet, or any computing device. "Coupled" is defined as connected, whether directly or indirectly through intervening components and is not necessarily limited to physical connections. "Coupled devices" are devices which are in signal communication with one another. "Connected" means directly connected or indirectly connected. "Wireless" can mean any form of wireless communication such as Wireless Fidelity (WIFI), Radio Frequency (RF), Bluetooth^{™}, optical, Zigbee or any other form of wireless communication.

The distillation process is often a time consuming task and running a rotary evaporator usually involves a person sitting or standing next to the rotary evaporator to monitor the system. This disclosure presents a system that can be remotely monitored via one or more connected devices. In at least one embodiment, the disclosure also includes remote control of the rotary evaporator by one or more connected devices. The one or more connected devices can be connected wirelessly to the rotary evaporator, thereby allowing users to remotely monitor and control their rotary evaporator via connected devices. The present disclosure also provides for one or more components of the rotary evaporator to be modular and/or replaceable.

As illustrated in the figure, a wireless rotary evaporator **1** has a first distilling flask **4** supported rotationally around an axis **2**. One or more materials **3** can be placed in the first distilling flask **4** to be distilled. A vapor tube **5** is coupled to the first distilling flask **4** and thus connected to its interior. The vapor tube is coupled along axis **2** and does not interfere with the rotary motion of the first distilling flask **4**.

The wireless rotary evaporator **1** can include a condensing chamber **6**. The vapor tube **5** is connected to a lower end **24** of the condensing chamber **6** in the interior chamber of the condensing chamber **6**. A condenser coil **8** is arranged in said interior chamber. The condenser coil **8** is connected to the cooling circuit, not shown in greater detail, in order to form a flow path 7. The flow path **7** is filled with a coolant, which flows during operation along the flow path **7** in order to perform cooling.

A distillate **10** can be collected in a second distillate flask **9**. The vapor tube **5** is connected to a connection tube **22**, the connection tube **22** is located between the interior chamber of the condensing chamber **6** and the interior of the second distillate flask **9**, by which the vapor tube **5** connects the first distillation flask **4** to the condensing chamber **6** and the second distillate flask **9**. The second distillate flask **9** coupled to a lower portion of the connection tube **22**.

The first distillation flask **4** can be heated by a heater **11**. The heater **11** is embodied in a known fashion and heats the first distillation flask **4** via a water or oil bath. During the heating process the first distillation flask **4** can be rotated by a driving member **12** around the axis **2**.

In one example, the first distillation flask **4** has a female connection joint (not shown) and the connection tube **22** has a male connection joint (not shown). The first distillation flask **4** and the connection tube **22** are coupled to each other by inserting the male connection joint of the connection tube **22** into the female connection joint of the first distillation flask **4**. The connection can be further secured by clamping member.

In another example, as shown in the figure, the first distillation flask **4** has a threaded male connection joint and the connection tube **22** has a threaded female connection joint. The first distillation flask **4** and the connection tube **22** are coupled to each other by threadedly engaging the threaded female connection joint of the connection tube **22** and the threaded male connection joint of the first distillation flask **4**. The connection can be further secured by clamping member. When a threaded connection is provided, the system allows for the use of standardized glassware rather than a custom made flask, as is common with a standard rotary evaporator. Additionally, the glassware can be a bottle, Erlenmeyer, or other shape and need not be a round-bottom flask as illustrated in the figure.

A vapor **13** created by heating the one or more materials **3** to be distilled can be guided through the vapor tube **5** and the connection tube **22** to the condensing chamber **6**. The vapor **13** can then be condensed on the condenser coil **8**. After the vapor **13** has condensed, the corresponding condensed vapor **13** is collected in the second distillate flask **9** via the connection tube **22**.

In order to determine the heating of the coolant in the condenser coil **8** a first temperature sensor **15** is located at a first position **14** in the flow path **7** of the coolant and a second temperature sensor **17** is located at a second position **16** in the flow path **7** of the coolant. The first location **14** is located at a top portion of the condenser coil **8** and the second position **16** is located at a bottom portion of the condenser coil **8**. A flow measuring device **19** is connected to the flow path **7** to determine the flow rate of the coolant through the condenser coil **8**. The flow measuring device **19** is located in the flow path **7** of the coolant outside the condensing chamber **6**. In one example, the wireless rotary evaporator can include one or more of temperature sensors, a timer, one or more pressure sensors. The storage device configured to store a log of temperature, time, and pressure and the microprocessor is configured to display the temperature, the time, and the pressure and transmit the temperature, the time, and the pressure to the one or more connected device.

In one example, the first temperature sensor **15** is located at an inlet **18** of the condenser coil **8** in the condensing chamber **6**. The second temperature sensor **17** is arranged at an outlet positioned at the second position **16** of the condenser coil **8** from the condensing chamber 6. The locations of the temperature sensors are selected such that the measured temperatures accurately reflect the coolant temperature during condensation of the vapor **13**.

In one example, the flow measuring device **19** is located between the first temperature sensor **15** and the inlet **18** of the condenser coil **8**. In another embodiment, the flow measuring device **19** is located between the second temperature sensor **17** and the outlet positioned at the second postion **16** of the condenser coil **8**.

A vacuum generator **20** is coupled to a top portion **23** of the condensing chamber **6** via a connection tube **21**. The vacuum generator **20** applies a negative pressure differential to the interior chamber of the condensing chamber **6** and the first distilling flask **4** to create a vacuum.

The wireless rotary evaporator **1** includes a controller **100**. The controller **100** can be electrically coupled or wirelessly connected to the wireless rotary evaporator **1**. The controller 100 can include a first wireless signal transmitter **101**. The controller **100** and first wireless signal transmitter **101** can be configured to send and/or receive data by any form of wireless communication such as Wireless Fidelity (WIFI), Radio Frequency (RF), Bluetooth^{™}, optical, Zigbee, or any other similar type of wireless transmission. The first wireless transmitter **101** is configured to transmit data from the controller **100** to a control device (not shown).

In one example, the controller **100** is coupled to the heater **11** and is configured to control the temperature of the heater **11**.

In another example, the controller **100** is coupled to the heater **11**, the first temperature sensor **15**, and the second temperature sensor **17**. The controller **100** is configured to control the temperature of the heater **11** and is configured to monitor and control the flow rate and temperature change of the coolant respectively.

In yet another example, the controller is coupled to the heater **11**, the first temperature sensor **15**, the second temperature sensor **17**, and a pressure release valve (not shown) located between the vacuum generator **20** and the connection tube **21**. The controller **100** is configured to control the temperature of the heater **11**, to monitor and control the flow rate and temperature change of the coolant, and to actuate the pressure release valve respectively.

In yet another example, the controller can be configured to send push notifications to the control device, via the first wireless signal transmitter **101**, when changes in conditions occur. The push notifications can contain information regarding changes in time, temperature, pressure, flow rate, or other conditions of the wireless rotary evaporator **1**. The wireless rotary evaporator can include a microprocessor. The microprocessor can be configured to receive instructions from one or more connected devices via a wireless communication system. The push notifications can be also sent by the microprocessor. The wireless rotary evaporator can track a plurality of data and notify users via push notification or alarm to preprogrammed events.

The wireless rotary evaporator **1** can further include one or more camera units **102**. A data recorder **104** is coupled to the camera unit **102** to record data obtained from the camera unit 102. The camera unit **102** can be electrically coupled or wirelessly connected to the wireless rotary evaporator **1**. The camera unit **102** further comprises a second wireless signal transmitter **103**. The camera unit (or units) **102** can be placed/arranged such that some or all of the remainder of the evaporator **1** can be observed thereby. The camera unit **102** and the second wireless signal transmitter **103** can be configured to send and/or receive data by any form of wireless communication such as Wireless Fidelity (WIFI), Radio Frequency (RF), Bluetooth^{™}, optical, Zigbee or any other similar type of wireless transmission. The second wireless signal transmitter **103** is configured to transmit data from the camera unit **102** to a control device (not shown). In one example, the wireless rotary evaporator can be controlled via a wireless radio.

The wireless rotary evaporator **1** can further comprise a storage device (not shown) configured to store data regarding libraries of food and food compounds that can be extracted using the rotary evaporator device and each member in the libraries having one or more associated time settings, temperature settings and pressure settings, wherein the one or more associated time settings, temperature settings and pressure settings provide for the extraction of a particular substance or substances from the food or foods. The data can be also stored in the microprocessor.

The wireless rotary evaporator **1** can further comprise a storage device (not shown) configured to store data regarding libraries of chemical compounds that can be extracted using the rotary evaporator device and each member in the libraries having one or more associated time settings, temperature settings and pressure settings, wherein the one or more associated time settings, temperature settings and pressure settings provide for the extraction of a particular chemical compounds within a mixture of chemicals. The data can be also stored in the microprocessor. In one example, the wireless rotary evaporator can store and log temperature, time, pressure and event data to show in graphs, or send to a plurality of connected device.

In one example, the wireless rotary evaporator can include a water bath. The wireless rotary evaporator can detect power usage by the water bath to determine if evaporation has occurred. In one example, the wireless rotary evaporator can include a vacuum pump. The wireless rotary evaporator can track the pressure via the vacuum pump to determine if evaporation has occurred.

The embodiments shown and described above are only examples. Therefore, many such details are neither shown nor described. Even though numerous characteristics and advantages of the present technology have been set forth in the foregoing description, together with details of the structure and function of the present disclosure, the disclosure is illustrative only, and changes may be made in the detail, especially in matters of shape, size and arrangement of the parts within the principles of the present disclosure to the full extent indicated by the broad general meaning of the terms used in the attached claims. It will therefore be appreciated that the embodiments described above may be modified within the scope of the appended claims.

Aspects of the present disclosure comprise:
1. A rotary evaporator device comprising a glassware portion including a first distillation flask, a vapor tube, a condensing chamber, a condenser coil, and a second distillate flask, wherein the first distillation flask is coupled to the vapor tube, the condenser coil is contained within the condensing chamber, both of the first distillate flask and the second distillate flask are coupled to the condensing chamber; a mechanical portion comprising a motorized lift, a motor that turns the vapor tube and a water bath, and a vacuum pump; and an electronic portion that is housed with the mechanical portion, wherein the electronic potion further comprises an LCD display and a microprocessor and a wireless radio for external monitoring.
2. The rotary evaporator device of numbered clause 1, wherein, optionally, the microprocessor can also connect to a camera for remote visual monitoring.
3. The rotary evaporator device of numbered clause 1 or 2, wherein, optionally, the vapor tube can support a screw cap mechanism to allow the connection of a threaded glassware.
4. The rotary evaporator device of any previous numbered clause, wherein, optionally, the microprocessor can be used to contain libraries of food and food compounds that can be extracted associated with time, temperature and pressures settings.
5. The rotary evaporator device of any previous numbered clause, wherein, optionally, the microprocessor can send "push notifications" to a plurality of connected devices.
6. The rotary evaporator device of any previous numbered clause, wherein, optionally, the device can be controlled via a wireless radio.
7. The rotary evaporator device of any previous numbered clause, wherein, optionally, the device can store and log temperature, time, pressure and event data to show in graphs, or send to a plurality of connected device.
8. The rotary evaporator device of any previous numbered clause, wherein, optionally, each part of the device can be user replaceable.
9. The rotary evaporator device of any previous numbered clause, wherein, optionally, the device can detect power usage by the water bath to determine if evaporation has occurred.
10. The rotary evaporator device of any previous numbered clause, wherein, optionally, the device can track the pressure via the vacuum pump to determine if evaporation has occurred.
11. The rotary evaporator device of any previous numbered clause, wherein, optionally, the device can track a plurality of data and notify users via push notification or alarm to preprogrammed events.
12. A rotary evaporator device comprising: a glassware portion including a first distillation flask coupled to a vapor tube that is placed within a condenser, and a second distillate flask coupled to the condenser and configured to receive a condensate; a mechanical portion comprising a motorized lift coupled to the distillation flask, a motor configured to turn the vapor tube, a modular water bath configured to receive the distillation flask, and a modular vacuum pump to apply a vacuum to the glassware portion; and an electric portion comprising a display coupled to a microprocessor that is coupled to the lift mechanism, the modular water bath, the modular vacuum pump and a wireless transmitter for external monitoring.
13. The rotary evaporator device of any previous numbered clause, wherein, optionally, the microprocessor is coupled to a camera for remote visual monitoring.
14. The rotary evaporator device of any previous numbered clause, wherein, optionally, the vapor tube is configured to cooperate with a screw cap mechanism to allow the connection of a plurality of common threaded bottles or flasks.
15. The rotary evaporator device of any previous numbered clause, the device optionally further comprising a storage device configured to store data regarding libraries of food and food compounds that can be extracted using the rotary evaporator device and each member in the libraries having one or more associated time settings, temperature settings and pressure settings, wherein the one or more associated time settings, temperature settings and pressure settings provide for the extraction of a particular substance or substances from the food or foods.
16. The rotary evaporator device of numbered clause 12, the device optionally further comprising a storage device configured to store data regarding libraries of chemical compounds that can be extracted using the rotary evaporator device and each member in the libraries having one or more associated time settings, temperature settings and pressures settings, wherein the one or more associated time settings, temperature settings and pressures settings provide for the extraction of a particular chemical compounds within a mixture of chemicals.
17. The rotary evaporator device of any previous numbered clause, wherein, optionally, the microprocessor can send "push notifications" to one or more connected devices.
18. The rotary evaporator device of numbered clause 17, wherein the microprocessor can be configured to receive instructions from one or more connected devices via a wireless communication system.
19. The rotary evaporator device of numbered clause 18, wherein, optionally, the device further comprises one or more of temperature sensors, a timer, one or more pressure sensors, wherein a storage device is configured to store a log of temperature, time, and pressure and the microprocessor is configured to display the temperature, the time, and the pressure and transmit the temperature, the time, and the pressure to the one or more connected device.
20. The rotary evaporator device of any previous numbered clause, wherein, optionally, at least one of the components of the glassware, mechanical, and electric portions are modular thereby allowing different components to be replaced.
21. The rotary evaporator device of any previous numbered clause, wherein, optionally, the device further comprises a power meter configured to detect power usage by the water bath and the microprocessor is configured to determine if evaporation has occurred.
22. The rotary evaporator device of numbered clause 20, wherein the device further comprising a pressure sensor and the microprocessor is configured to determine that evaporation is occurring in response to pressure data received from the pressure sensor.
23. The rotary evaporator device of any previous numbered clause, wherein the device further comprising a plurality of sensors including at least one pressure and temperature sensor, wherein the microprocessor is configured to instruct the wireless transmitter to push data received from a plurality of sensors to one or more connected device.
24. The rotary evaporator device of numbered clause 23, wherein the microprocessor is configured to determine if a preprogramed event has occurred and transmit push data regarding the preprogrammed event to one or more of connected device.

## Claims

1. A rotary evaporator device comprising:
a glassware portion including a first distillation flask, a vapor tube, a condensing chamber, a condenser coil, and a second distillate flask, wherein the first distillation flask is coupled to the vapor tube, the condenser coil is contained within the condensing chamber, both of the first distillate flask and the second distillate flask are coupled to the condensing chamber;
a mechanical portion comprising a motorized lift, a motor configured to turn the vapor tube and a water bath, and a vacuum pump; and
an electronic portion, wherein the electronic potion comprises a display and a microprocessor and a wireless radio for external monitoring.

2. The rotary evaporator device of claim 1, wherein the microprocessor can also connect to a camera for remote visual monitoring.

3. The rotary evaporator device of claim 1 or 2, wherein the microprocessor can be used to contain libraries of food and food compounds that can be extracted associated with time, temperature and pressures settings.

4. The rotary evaporator device of any previous claim,
wherein the microprocessor can send "push notifications" to one or more connected devices and/or
wherein the microprocessor is configured to receive instructions from the one or more connected devices via a wireless communication system and/or
wherein the microprocessor is configured to determine if a preprogramed event has occurred and transmit push data regarding the preprogrammed event to the one or more connected devices.

5. The rotary evaporator device of any previous claim, wherein the device can be controlled via a wireless radio.

6. The rotary evaporator device of any previous claim, wherein the device can store and log temperature, time, pressure and event data to show in graphs, or send to a plurality of connected device.

7. The rotary evaporator device of any previous claim, wherein each part of the device can be user replaceable.

8. The rotary evaporator device of any previous claim, wherein the device can detect power usage by the water bath to determine if evaporation has occurred.

9. The rotary evaporator device of any previous claim, wherein the device can track the pressure via the vacuum pump to determine if evaporation has occurred.

10. The rotary evaporator device of any previous claim, wherein the device can track a plurality of data and notify users via push notification or alarm to preprogrammed events.

11. The rotary evaporator device of any previous claim, wherein the vapor tube is configured to cooperate with a screw cap mechanism to allow the connection of a plurality of common threaded bottles or flasks or a threaded glassware.

12. The rotary evaporator device of any previous claim, wherein the device further comprising a storage device,
wherein the storage device is configured to store data regarding libraries of food and food compounds that can be extracted using the rotary evaporator device and each member in the libraries having one or more associated time settings, temperature settings and pressure settings, wherein the one or more associated time settings, temperature settings and pressure settings provide for the extraction of a particular substance or substances from the food or foods and/or
wherein the storage device is configured to store data regarding libraries of chemical compounds that can be extracted using the rotary evaporator device and each member in the libraries having one or more associated time settings, temperature settings and pressures settings, wherein the one or more associated time settings, temperature settings and pressures settings provide for the extraction of a particular chemical compounds within a mixture of chemicals.

13. The rotary evaporator device of any previous claim, wherein the device further comprises one or more of temperature sensors, a timer, one or more pressure sensors, wherein a storage device is configured to store a log of temperature, time, and pressure and the microprocessor is configured to display the temperature, the time, and the pressure and transmit the temperature, the time, and the pressure to the one or more connected device.

14. The rotary evaporator device of any previous claim, wherein at least one of the components of the glassware, mechanical, and electric portions are modular thereby allowing different components to be replaced.

15. The rotary evaporator device of any previous claim, wherein the device further comprises
a power meter configured to detect power usage by the water bath and the microprocessor is configured to determine if evaporation has occurred and/or
a pressure sensor and the microprocessor is configured to determine that evaporation is occurring in response to pressure data received from the pressure sensor and /or
a plurality of sensors including at least one pressure and temperature sensor, wherein the microprocessor is configured to instruct the wireless transmitter to push data received from a plurality of sensors to one or more connected device.
